# EUROPEAN PATENT SPECIFICATION

(11) **EP 3 430 840 B1**
(45) Date of publication and mention of the grant of the patent: **11.08.2021**
(21) Application number: 17712051.6
(22) Date of filing: 14.03.2017
(51) Int. Cl.: H04W 48/20, H04M 11/02, H04N 7/18

(54) **DISTRIBUTED WIRELESS INTERCOM AUDIO ROUTING OVER ETHERNET WITH ROAMING**
VERTEILTES AUDIOROUTING EINER DRAHTLOSEN GEGENSPRECHANLAGE ÜBER ETHERNET MIT ROAMING
ROUTAGE AUDIO RÉPARTI D'INTERCOMMUNICATION SANS FIL SUR ETHERNET AVEC DE L'ITINÉRANCE

(30) Priority: 14.03.2016 US 201662307995 P
(43) Date of publication of application: 23.01.2019
(73) Proprietor: Robert Bosch GmbH, 70442 Stuttgart (DE)
(72) Inventor: JENKINS, Keith, Lincoln, Nebraska 68516 (US); FRIESEN, La Rhue Gene, Lincoln, Nebraska 68507-3326 (US); ANDERSEN, Jim, Lincoln, Nebraska 68506 (US); BRCHAN, Jason, Omaha, Nebraska 68154 (US)
(86) International application number: PCT/EP2017/055945
(87) International publication number: WO 2017/157909

(56) References cited:
- WO-A1-2015/158266
- US-A1- 2010 309 894
- US-A1- 2012 039 230
- US-A1- 2015 245 410
- US-A1- 2015 319 407

## Description

### BACKGROUND

The present invention relates to a first wireless access point for routing audio stream data in a system which comprises an intercom system. US 2015/245410 discloses wireless access points that detect neighboring wireless access points in different subnets. Upon connecting with a wireless client, a wireless access point determines predictive roaming information for the wireless client. Predictive roaming information identifies the wireless client; its home network subnet, and includes connection information associated with the wireless client. The wireless access point forwards the predictive roaming information associated with a wireless client to neighboring wireless access points while the wireless client is still connected with the wireless access point. Neighboring wireless access points store received predictive roaming information. Upon connecting with a wireless client, a neighboring wireless access point determines if the wireless client matches the stored predictive roaming information. If so, the neighboring wireless access point uses the predictive roaming information to quickly connect with the wireless client and to establish a tunnel to redirect network traffic associated with the wireless client through to its home subnet. US 2015/319407 discloses that responsive to a processor of a first intercom unit establishing a wireless data channel with one or more second intercom units of a plurality of intercom units in a wireless network, and responsive to an encoder of the first intercom unit repeatedly encoding, during a repeated time interval, data is to be transmitted to the one or more second intercom units over the wireless data channel while pausing the wireless data channel such that the first intercom unit does not transmit the encoded data during the repeated time interval, the processor may receive an indication to un-pause the wireless data channel. A network controller of the first intercom unit may wirelessly transmit the data last encoded by the encoder during the repeated time interval to the one or more second intercom units. Moreover, US2013272275 A1 discloses a digital wireless intercom system including: at least one master base station, BS, and at least one remote BS connected to the at least one master BS wiredly through at least one local area network, LAN. A plurality of first belt packs, BPs, may be within a transmission radius of the at least one master BS and communicate wirelessly with the master BS. Likewise, a plurality of second belt packs, BPs, may be within a transmission radius of the at least one remote BS and communicate wirelessly with the remote BS. The master BS and the remote BS may exchange data signals, thereby allowing BPs of the two different BSs to communicate between each other. Furthermore, US2006159073 A1 discloses a call processing apparatus, which may be part of an access point, AP, and a related method in a WiFi network system. The call processing apparatus constructs an IP table for enabling intercommunication between WiFi terminals. When a user wishes to establish a call with a destination terminal, the user enters a destination terminal telephone number in its terminal. It is then determined by the call processing apparatus whether the destination terminal has an intercommunication option set in the IP table. If that is the case, a call connection request message is transmitted directly to the destination terminal via the AP, thereby establishing a call connection without having to pass through a soft-switch. The call processing message can be directly transmitted or received for communication between in-house WiFi phones without having to pass through the soft-switch so that communication between the WiFi phones can be enabled without connection to the soft-switch, even if the Internet malfunctions.

### SUMMARY

The invention is defined in the appended claims.

### BRIEF DESCRIPTION OF THE DRAWINGS

Fig. 1 is a block diagram of an intercom system with a central server for managing and routing audio data.
Fig. 2 is a block diagram of an intercom system that does not require a central server for managing and routing audio data.
Fig. 3 is a flowchart of a method for routing audio data from a beltpack device through one or more access points to the intercom system using the system of Fig. 2.
Fig. 4 is a schematic diagram of a beltpack device transmitting audio data while connected as a visitor on a first access point.
Fig. 5 is a schematic diagram of the beltpack device of Fig. 4 transmitting audio data while connected as a visitor on a second access point.
Fig. 6 is a schematic diagram of the beltpack device of Fig. 4 transmitting audio data while connected to its home access point.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

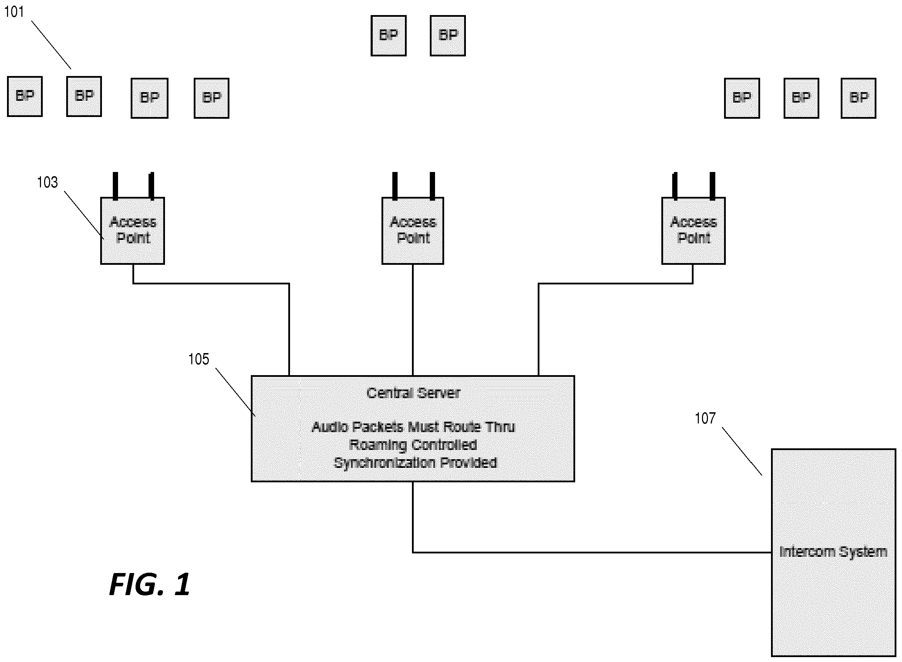

Fig. 1 illustrates an example of a centralized wireless intercom system. The system includes a plurality of portable wireless beltpack devices 101. Each beltpack device 101 connects to one of a plurality of access points 103. In some implementations, a beltpack device 101 will connect to whichever access point 103 is currently in range or whichever access point 103 provides the strongest connection and has an available RF channel to accommodate a beltpack. When a user operates a beltpack device 101 to transmit audio to the intercom system, the access point 103 receives the audio data from the beltpack and routes the audio data packets through a central server 105. The central server 105 controls roaming and synchronization of the audio data and forwards the received audio data to the intercom system 107.

However, the centralized intercom system of Fig. 1 presents some limitations. First, the cost of procuring, installing, and maintaining a centralized controller adds to the overall cost of the system. The centralized system is not easily scalable compared to the decentralized system. The centralized controller also presents a single point of failure - if there is a problem with the central server 105, then the entire wireless intercom network becomes unusable.

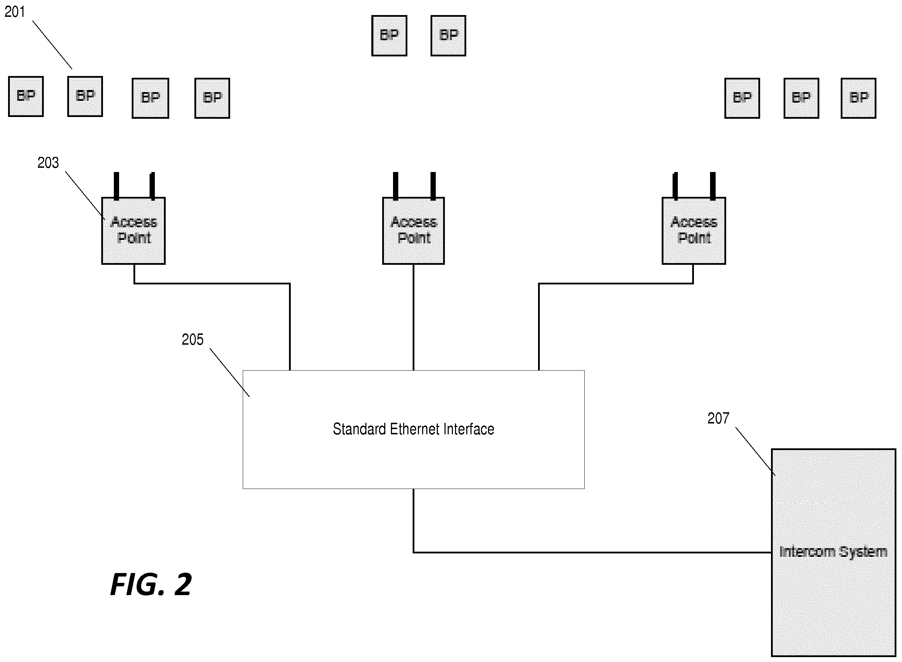

Fig. 2 illustrates an example of a wireless intercom system that does not include a central controller. Again, the portable wireless beltpack devices 201 each connect to one of a plurality of access points 203. However, the access points 203 communicate with each other and with the intercom system 207 through a standard Ethernet interface 205. The system of Fig. 2 can be connected and installed using standard Ethernet signaling and cable to simply installation, makes it universal, and reduces wiring costs. Furthermore, the access points do not need to be connected to a single central controller and, therefore, the single point of failure is removed. If a single access point fails, the intercom system can continue to operate with the remaining access points.

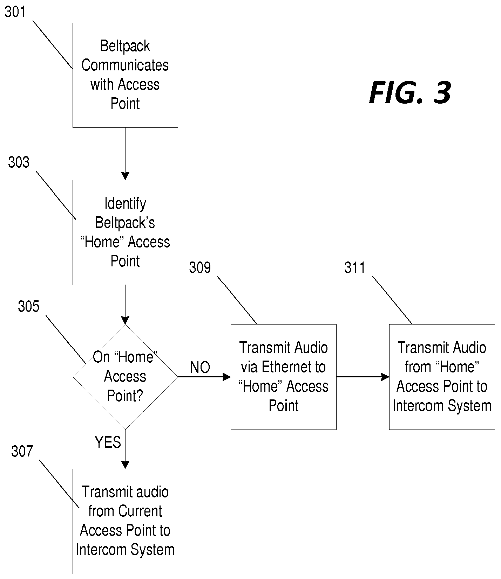

Fig. 3 further illustrates how audio data transmitted from each beltpack is processed by the system of Fig. 2 and ultimately transmitted to the intercom system 207. Each beltpack device 201 is assigned a "home" access point by the user when the system is initially set up. Each beltpack device 201 is programmed to identify its "home" access point using an electronic address. When a beltpack device connects with an access point (step 301), it identifies its "home" access point by the electronic address (step 303). If the access point receiving the data from the beltpack determines that it is the "home" access point for the beltpack (step 305), then the access point processes the received data and transmits it directly to the intercom system through the Ethernet connection (step 307). However, if the access point determines that the beltpack is a "visitor" (step 305), then the access point identifies the beltpack's "home" access point by the electronic address provided by the beltpack and transmits the received audio data via the Ethernet connection to the beltpack's "home" access point (step 309). The beltpack's "home" access point then processes the received data and transmits it directly to the intercom system through the Ethernet connection (step 311). As such, the beltpack is able to "roam" physically and can wirelessly transmit audio through any of the access points of the intercom system. However, regardless of the current location of the beltpack or the particular access point that the beltpack is currently connected to, the intercom system receives the audio data generated by the beltpack as though the beltpack had been connected to its "home" access point.

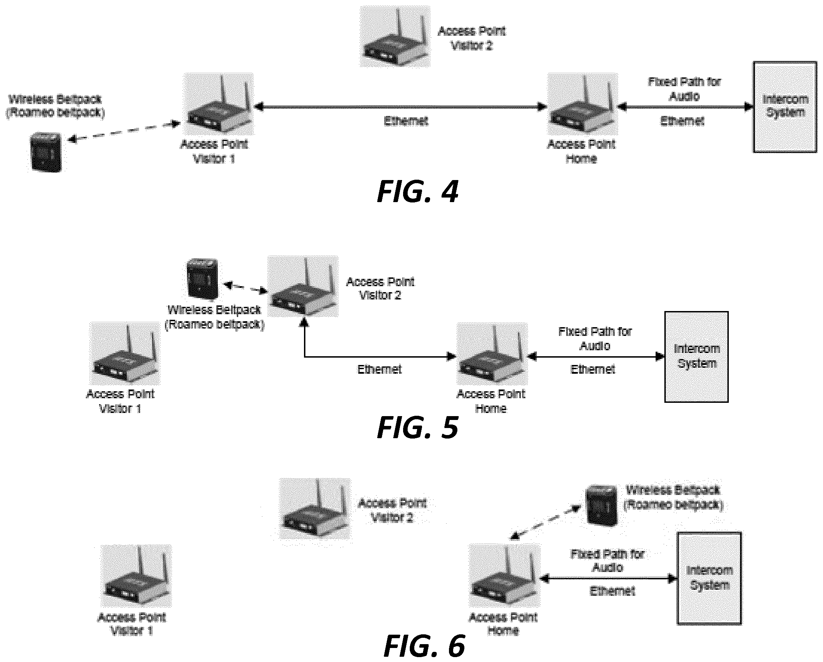

Figs. 4-6 illustrate various examples of the method of Fig. 3. In these examples, the system includes three different access points (identified as "Access Point Visitor 1," "Access Point Visitor 2," and "Access Point Home"). In the example of Fig. 4, the wireless beltpack is connected to a first access point as a "visitor" (Access Point Visitor 1) and generates audio data to be sent to the intercom system. The first access point (Access Point Visitor 1) receives the electronic address of the wireless beltpack's "home" access point and transmits the audio data from the beltpack to its "home" access point via the Ethernet connection. The audio data is then routed by the "home" access point to the intercom system via a fixed audio path. The intercom system likewise also transmits audio data to the access points which then wirelessly transmits the data to be received by the appropriate beltpack.

Similarly, in the example of Fig. 5, the wireless beltpack connects to the second access point (Access Point Visitor 2) and generates audio data to be sent to the intercom system. The second access point is also able to identify the beltpack's "home" access point and forwards the audio data over the Ethernet connection to the "home" access point where it is then routed to the intercom system via a fixed audio path.

Finally, in the example of Fig. 6, the beltpack is connected to its "home" access point. The access point determines that it is the "home" access point for the beltpack based on the electronic address received from the beltpack and, therefore, the access point routes the audio data directly to the intercom system via the fixed audio path.

Although the examples illustrated in Figs. 4-6 describe system where audio data is routed between the access points and an intercom system, in some implementations, the system does not include any separate "intercom system." In such implementations, the access points are configured to interact and manage data such that audio data received from one beltpack is transmitted to another beltpack as appropriate directly through the access points.

Thus, the invention provides, among other things, a distributed wireless intercom system for routing audio data over Ethernet between multiple access point in order to provide audio synchronization and roaming for connected portable wireless beltpack devices. Various features and advantages of the invention are set forth in the following claims.

## Claims

1. A first wireless access point for routing audio stream data in a system which comprises an intercom system (107, 207), a plurality of wireless access points (103, 203), said plurality of wireless access points (103, 203) comprising the first wireless access point and a second wireless access point, the system further comprising a plurality of wireless intercom devices,
wherein each wireless intercom device of the plurality of wireless intercom devices is assigned one wireless access point of the plurality of wireless access points (103, 203) as a home access point for the wireless intercom device and each wireless intercom device is programed to identify its home access point using an electronic address;
wherein the first wireless access point comprises:
a wireless transceiver; and
an electronic processor
further wherein the electronic processor of the first wireless access point is adapted to:
receive a first audio data stream from a first wireless intercom device of the plurality of wireless intercom devices;
identify a home access point for the first wireless intercom device;
transmit the first audio data stream received from the first wireless intercom device directly to the intercom system (107, 207) in response to a determination that the first wireless access point is the home access point for the first wireless intercom device;
receive a second audio data stream from a second wireless intercom device of the plurality of wireless intercom devices;
identify a home access point for the second wireless intercom device;
transmit the second audio data stream received from the second wireless intercom device to the second wireless access point in response to a determination that the second wireless access point is the home access point for the second wireless intercom device;
wherein the first wireless access point is communicatively coupled to the second wireless access point by an Ethernet connection,
wherein the electronic processor of the first wireless access point is configured to transmit the second audio data stream from the second wireless intercom device to the second wireless access point by transmitting the second audio data stream from the first wireless access point to the second wireless access point through an Ethernet connection communicatively coupling the first wireless access point to the second wireless access point;
further wherein the electronic processor of the first wireless access point is configured to transmit the second audio data stream received from the second wireless intercom device to the intercom system (107, 207) through the second wireless access point by transmitting the audio data from the second wireless intercom device to the second wireless access point through the Ethernet connection.

2. The first wireless access point of claim 1, wherein the electronic processor is further configured to:
receive the second audio data stream from the second wireless access point through the
Ethernet connection,
wherein the second audio data stream is wirelessly received by the second wireless access point from a second wireless intercom device, and
transmit the second audio data stream through the wireless transceiver to one or more additional wireless intercom devices connected to the intercom system (107, 207) through the wireless access point.

3. The first wireless access point of claim 1, wherein the electronic processor is configured to identify the home access point for the first wireless intercom device by receiving a signal from the first wireless intercom device identifying the home access point assigned to the first wireless intercom device.

4. A method of routing audio stream data in a system, the system comprising:
an intercom system (107, 207);
a plurality of wireless access points (103, 203) and a plurality of wireless intercom devices, said plurality of wireless access points (103, 203) comprising a first and a second wireless access point,
wherein each wireless intercom device of the plurality of wireless intercom devices is assigned one wireless access point of the plurality of wireless access points (103, 203) as a home access point for the wireless intercom device, and each wireless intercom device is programed to identify its home access point using an electronic address;
the method comprising:
receiving, by the first wireless access point of the plurality of wireless access points, a first audio data stream from a first wireless intercom device of the plurality of wireless intercom devices;
identifying, by the first wireless access point, a home access point for the first wireless intercom device;
transmitting, by the first wireless access point, the first audio data stream received from the first wireless intercom device directly to the intercom system (107, 207) in response to a determination that the first wireless access point is the home access point for the first wireless intercom device;
receiving, by the first wireless access point, a second audio data stream from a second wireless intercom device of the plurality of wireless intercom devices;
identifying, by the first wireless access point, a home access point for the second wireless intercom device;
transmitting, by the first wireless access point, the second audio data stream received from the second wireless intercom device to the second wireless access point in response to a determination that the second wireless access point is the home access point for the second wireless intercom device; and
transmitting, by the second wireless access point, the second audio data stream received from the second wireless intercom device, and received from the second wireless access point at the first wireless access point, to the intercom system,
wherein transmitting, by the first wireless access point, the second audio data stream from the second wireless intercom device to the second wireless access point includes transmitting the second audio data stream from the first wireless access point to the second wireless access point through an Ethernet connection communicatively coupling the first wireless access point to the second wireless access point,
further wherein the first wireless access point transmits the second audio data stream received from the second wireless intercom device to the intercom system (107, 207) through the second wireless access point by transmitting the audio data from the second wireless intercom device to the second wireless access point through the Ethernet connection.

5. The method of claim 4, further comprising receiving, by the second wireless access point, a third audio data stream from a third wireless intercom device of the plurality of wireless intercom devices;
identifying, by the second wireless access point, a home access point for the third wireless intercom device;
transmitting, by the second wireless access point, the third audio data stream from the third wireless intercom device to the first wireless access point in response to a determination that the first wireless access point is the home access point for the third wireless intercom device; and
transmitting, by the first wireless access point, the third audio data stream from the third wireless intercom device to the intercom system.

6. The method of claim 4, wherein identifying the home access point of the third wireless intercom device includes receiving a signal from the third wireless intercom device identifying the home access point assigned to the third wireless intercom device.

## Patentansprüche

1. Erster drahtloser Zugangspunkt für Audiostromdaten-Routing in einem System, das eine Gegensprechanlage (107, 207) und eine Mehrzahl von drahtlosen Zugangspunkten (103, 203) umfasst, wobei die Mehrzahl von drahtlosen Zugangspunkten (103, 203) den ersten drahtlosen Zugangspunkt und einen zweiten drahtlosen Zugangspunkt umfasst, wobei das System ferner eine Mehrzahl von drahtlosen Gegensprecheinrichtungen umfasst, wobei jeder drahtlosen Gegensprecheinrichtung der Mehrzahl von drahtlosen Gegensprecheinrichtungen ein drahtloser Zugangspunkt der Mehrzahl von drahtlosen Zugangspunkten (103, 203) als ein Heim-Zugangspunkt für die drahtlose Gegensprecheinrichtung zugeordnet ist, und jede drahtlose Gegensprecheinrichtung zum Identifizierten ihres Heim-Zugangspunkts unter Verwendung einer elektronischen Adresse programmiert ist;
wobei der erste drahtlose Zugangspunkt umfasst:
einen drahtlosen Sendeempfänger und
einen elektronischen Prozessor,
wobei ferner der elektronische Prozessor des ersten drahtlosen Zugangspunkts ausgelegt ist zum:
Empfangen eines ersten Audiodatenstroms von einer ersten drahtlosen Gegensprecheinrichtung der Mehrzahl von drahtlosen Gegensprecheinrichtungen;
Identifizieren eines Heim-Zugangspunkts für die erste drahtlose Gegensprecheinrichtung;
Senden des ersten Audiodatenstroms, der von der ersten drahtlosen Gegensprecheinrichtung empfangen wird, in Reaktion auf eine Bestimmung, dass der erste drahtlose Zugangspunkt der Heim-Zugangspunkt für die erste drahtlose Gegensprecheinrichtung ist, direkt an die Gegensprechanlage (107, 207);
Empfangen eines zweiten Audiodatenstroms von einer zweiten drahtlosen Gegensprecheinrichtung der Mehrzahl von drahtlosen Gegensprecheinrichtungen;
Identifizieren eines Heim-Zugangspunkts für die zweite drahtlose Gegensprecheinrichtung;
Senden des zweiten Audiodatenstroms, der von der zweiten drahtlosen Gegensprecheinrichtung empfangen wird, in Reaktion auf eine Bestimmung, dass der zweite drahtlose Zugangspunkt der Heim-Zugangspunkt für die zweite drahtlose Gegensprecheinrichtung ist, an den zweiten drahtlosen Zugangspunkt;
wobei der erste drahtlose Zugangspunkt mit dem zweiten drahtlosen Zugangspunkt durch eine Ethernet-Verbindung kommunikativ gekoppelt ist,
wobei der elektronische Prozessor des ersten drahtlosen Zugangspunkts so konfiguriert ist, dass er den zweiten Audiodatenstrom von der zweiten drahtlosen Gegensprecheinrichtung an den zweiten drahtlosen Zugangspunkt sendet, indem er den zweiten Audiodatenstrom vom ersten drahtlosen Zugangspunkt durch eine Ethernet-Verbindung, die den ersten drahtlosen Zugangspunkt kommunikativ mit dem zweiten drahtlosen Zugangspunkt verbindet, an den zweiten drahtlosen Zugangspunkt sendet;
wobei ferner der elektronische Prozessor des ersten drahtlosen Zugangspunkts so konfiguriert ist, dass er den zweiten Audiodatenstrom, der von der zweiten drahtlosen Gegensprecheinrichtung empfangen wird, durch den zweiten drahtlosen Zugangspunkt an die Gegensprechanlage (107, 207) sendet, indem er die Audiodaten von der zweiten drahtlosen Gegensprecheinrichtung durch die Ethernet-Verbindung an den zweiten drahtlosen Zugangspunkt sendet.

2. Erster drahtloser Zugangspunkt nach Anspruch 1, wobei der elektronische Prozessor konfiguriert ist zum:
Empfangen des zweiten Audiodatenstroms vom zweiten drahtlosen Zugangspunkt durch die Ethernet-Verbindung,
wobei der zweite Audiodatenstrom durch den zweiten drahtlosen Zugangspunkt drahtlos von einer zweiten drahtlosen Gegensprecheinrichtung empfangen wird; Senden des zweiten Audiodatenstroms durch den drahtlosen Sendeempfänger an eine oder mehrere zusätzliche Gegensprecheinrichtungen, die durch den drahtlosen Zugangspunkt mit der Gegensprechanlage (107, 207) verbunden sind.

3. Erster drahtloser Zugangspunkt nach Anspruch 1, wobei der elektronische Prozessor so konfiguriert ist, dass er den Heim-Zugangspunkt für die erste drahtlose Gegensprecheinrichtung durch Empfangen eines Signals von der ersten drahtlosen Gegensprecheinrichtung identifiziert, das den Heim-Zugangspunkt identifiziert, der der ersten drahtlosen Gegensprecheinrichtung zugeordnet ist.

4. Verfahren für Audiostromdaten-Routing in einem System, wobei das System umfasst:
eine Gegensprechanlage (107, 207);
eine Mehrzahl von drahtlosen Zugangspunkten (103, 203) und eine Mehrzahl von drahtlosen Gegensprecheinrichtungen, wobei die Mehrzahl von drahtlosen Zugangspunkten (103, 203) einen ersten und einen zweiten drahtlosen Zugangspunkt umfasst, wobei jeder drahtlosen Gegensprecheinrichtung der Mehrzahl von drahtlosen Gegensprecheinrichtungen ein drahtloser Zugangspunkt der Mehrzahl von drahtlosen Zugangspunkten (103, 203) als ein Heim-Zugangspunkt für die drahtlose Gegensprecheinrichtung zugeordnet ist, und jede drahtlose Gegensprecheinrichtung zum Identifizierten ihres Heim-Zugangspunkts unter Verwendung einer elektronischen Adresse programmiert ist;
wobei das Verfahren umfasst:
Empfangen eines ersten Audiodatenstroms von einer ersten drahtlosen Gegensprecheinrichtung der Mehrzahl von Gegensprecheinrichtungen durch den ersten drahtlosen Zugangspunkt der Mehrzahl von drahtlosen Zugangspunkten;
Identifizieren eines Heim-Zugangspunkts für die erste drahtlose Gegensprecheinrichtung durch den ersten drahtlosen Zugangspunkt;
Senden des ersten Audiodatenstroms, der von der ersten drahtlosen Gegensprecheinrichtung empfangen wird, durch den ersten drahtlosen Zugangspunkt in Reaktion auf eine Bestimmung, dass der erste drahtlose Zugangspunkt der Heim-Zugangspunkt für die erste drahtlose Gegensprecheinrichtung ist, direkt an die Gegensprechanlage (107, 207);
Empfangen eines zweiten Audiodatenstroms durch den ersten drahtlosen Zugangspunkt von einer zweiten drahtlosen Gegensprecheinrichtung der Mehrzahl von drahtlosen Gegensprecheinrichtungen;
Identifizieren eines Heim-Zugangspunkts für die zweite drahtlose Gegensprecheinrichtung durch den ersten drahtlosen Zugangspunkt;
Senden des zweiten Audiodatenstroms, der von der zweiten drahtlosen Gegensprecheinrichtung empfangen wird, durch den ersten drahtlosen Zugangspunkt in Reaktion auf eine Bestimmung, dass der zweite drahtlose Zugangspunkt der Heim-Zugangspunkt für die zweite drahtlose Gegensprecheinrichtung ist, an den zweiten drahtlosen Zugangspunkt; und
Senden des zweiten Audiodatenstroms, der von der zweiten Gegensprecheinrichtung empfangen wird und vom zweiten drahtlosen Zugangspunkt am ersten drahtlosen Zugangspunkt empfangen wird, durch den zweiten drahtlosen Zugangspunkt an die Gegensprechanlage,
wobei das Senden des zweiten Audiodatenstroms durch den ersten drahtlosen Zugangspunkt von der zweiten drahtlosen Gegensprecheinrichtung an den zweiten drahtlosen Zugangspunkt ein Senden des zweiten Audiodatenstroms vom ersten drahtlosen Zugangspunkt durch eine Ethernet-Verbindung, die den ersten drahtlosen Zugangspunkt kommunikativ mit dem zweiten drahtlosen Zugangspunkt verbindet, an den zweiten drahtlosen Zugangspunkt umfasst, wobei ferner der erste drahtlose Zugangspunkt den zweiten Audiodatenstrom, der von der zweiten drahtlosen Gegensprecheinrichtung empfangen wird, durch den zweiten drahtlosen Zugangspunkt an die Gegensprechanlage (107, 207) sendet, indem er die Audiodaten von der zweiten drahtlosen Gegensprecheinrichtung durch die Ethernet-Verbindung an den zweiten drahtlosen Zugangspunkt sendet.

5. Verfahren nach Anspruch 4, ferner umfassend:
Empfangen eines dritten Audiodatenstroms durch den zweiten drahtlosen Zugangspunkt von einer dritten drahtlosen Gegensprecheinrichtung der Mehrzahl von drahtlosen Gegensprecheinrichtungen;
Identifizieren eines Heim-Zugangspunkts für die dritte drahtlose Gegensprecheinrichtung durch den zweiten drahtlosen Zugangspunkt;
Senden des dritten Audiodatenstroms von der dritten drahtlosen Gegensprecheinrichtung durch den zweiten drahtlosen Zugangspunkt in Reaktion auf eine Bestimmung, dass der erste drahtlose Zugangspunkt der Heim-Zugangspunkt für die dritte drahtlose Gegensprecheinrichtung ist, an den ersten drahtlosen Zugangspunkt; und
Senden des dritten Audiodatenstroms durch den ersten drahtlosen Zugangspunkt von der dritten drahtlosen Gegensprecheinrichtung an die Gegensprechanlage.

6. Verfahren nach Anspruch 4, wobei das Identifizieren des Heim-Zugangspunkts für die dritte drahtlose Gegensprecheinrichtung ein Empfangen eines Signals von der dritten drahtlosen Gegensprecheinrichtung umfasst, das den Heim-Zugangspunkt identifiziert, der der dritten drahtlosen Gegensprecheinrichtung zugeordnet ist.

## Revendications

1. Premier point d'accès sans fil pour acheminer des données de flux audio dans un système qui comprend un système d'interphone (107, 207), une pluralité de points d'accès sans fil (103, 203), ladite pluralité de points d'accès sans fil (103, 203) comprenant le premier point d'accès sans fil et un deuxième point d'accès sans fil, le système comprenant en outre une pluralité de dispositifs d'interphone sans fil,
où chaque dispositif d'interphone sans fil de la pluralité de dispositifs d'interphone sans fil se voit attribuer un point d'accès sans fil de la pluralité de points d'accès sans fil (103, 203) en tant que point d'accès domestique pour le dispositif d'interphone sans fil et chaque dispositif d'interphone sans fil est programmé pour identifier son point d'accès domestique en utilisant une adresse électronique ;
où le premier point d'accès sans fil comprend :
un émetteur-récepteur sans fil ; et
un processeur électronique ;
où, en outre, le processeur électronique du premier point d'accès sans fil est adapté pour :
recevoir un premier flux de données audio provenant d'un premier dispositif d'interphone sans fil de la pluralité de dispositifs d'interphone sans fil ;
identifier un point d'accès domestique pour le premier dispositif d'interphone sans fil ;
transmettre le premier flux de données audio reçu du premier dispositif d'interphone sans fil directement au système d'interphone (107, 207) en réponse à une détermination que le premier point d'accès sans fil est le point d'accès domestique pour le premier dispositif d'interphone sans fil ;
recevoir un deuxième flux de données audio provenant d'un deuxième dispositif d'interphone sans fil de la pluralité de dispositifs d'interphone sans fil ;
identifier un point d'accès domestique pour le deuxième dispositif d'interphone sans fil ;
transmettre le deuxième flux de données audio reçu du deuxième dispositif d'interphone sans fil au deuxième point d'accès sans fil en réponse à une détermination que le deuxième point d'accès sans fil est le point d'accès domestique pour le deuxième dispositif d'interphone sans fil ;
où le premier point d'accès sans fil est couplé de manière communicative au deuxième point d'accès sans fil par une connexion Ethernet,
où le processeur électronique du premier point d'accès sans fil est configuré pour transmettre le deuxième flux de données audio du deuxième dispositif d'interphone sans fil au deuxième point d'accès sans fil en transmettant le deuxième flux de données audio du premier point d'accès sans fil au deuxième point d'accès sans fil par une connexion Ethernet couplant de manière communicative le premier point d'accès sans fil au deuxième point d'accès sans fil ;
où, en outre, le processeur électronique du premier point d'accès sans fil est configuré pour transmettre le deuxième flux de données audio reçu du deuxième dispositif d'interphone sans fil au système d'interphone (107, 207) par l'intermédiaire du deuxième point d'accès sans fil en transmettant les données audio du deuxième dispositif d'interphone sans fil au deuxième point d'accès sans fil par l'intermédiaire de la connexion Ethernet.

2. Premier point d'accès sans fil selon la revendication 1, dans lequel le processeur électronique est en outre configuré pour :
recevoir le deuxième flux de données audio du deuxième point d'accès sans fil par l'intermédiaire de la connexion Ethernet,
où le deuxième flux de données audio est reçu sans fil par le deuxième point d'accès sans fil depuis un deuxième dispositif d'interphone sans fil, et
transmettre le deuxième flux de données audio par l'intermédiaire de l'émetteur-récepteur sans fil à un ou plusieurs dispositifs d'interphone sans fil supplémentaires connectés au système d'interphone (107, 207) par l'intermédiaire du point d'accès sans fil.

3. Premier point d'accès sans fil selon la revendication 1, dans lequel le processeur électronique est configuré pour identifier le point d'accès domestique pour le premier dispositif d'interphone sans fil en recevant un signal du premier dispositif d'interphone sans fil identifiant le point d'accès domestique attribué au premier dispositif d'interphone sans fil.

4. Procédé de routage de données de flux audio dans un système, le système comprenant :
un système d'interphone (107, 207) ;
une pluralité de points d'accès sans fil (103, 203) et une pluralité de dispositifs d'interphone sans fil, ladite pluralité de points d'accès sans fil (103, 203) comprenant un premier et un deuxième point d'accès sans fil,
où chaque dispositif d'interphone sans fil de la pluralité de dispositifs d'interphone sans fil se voit attribuer un point d'accès sans fil de la pluralité de points d'accès sans fil (103, 203) en tant que point d'accès domestique pour le dispositif d'interphone sans fil, et chaque dispositif d'interphone sans fil est programmé pour identifier son point d'accès domestique en utilisant une adresse électronique ;
le procédé comprenant les étapes suivantes :
recevoir, par le premier point d'accès sans fil de la pluralité de points d'accès sans fil, un premier flux de données audio provenant d'un premier dispositif d'interphone sans fil de la pluralité de dispositifs d'interphone sans fil ;
identifier, par le premier point d'accès sans fil, un point d'accès domestique pour le premier dispositif d'interphone sans fil ;
transmettre, par le premier point d'accès sans fil, le premier flux de données audio reçu du premier dispositif d'interphone sans fil directement au système d'interphone (107, 207) en réponse à une détermination que le premier point d'accès sans fil est le point d'accès domestique pour le premier dispositif d'interphone sans fil ;
recevoir, par le premier point d'accès sans fil, un deuxième flux de données audio provenant d'un deuxième dispositif d'interphone sans fil de la pluralité de dispositifs d'interphone sans fil ;
identifier, par le premier point d'accès sans fil, un point d'accès domestique pour le deuxième dispositif d'interphone sans fil ;
transmettre, par le premier point d'accès sans fil, le deuxième flux de données audio reçu du deuxième dispositif d'interphone sans fil au deuxième point d'accès sans fil en réponse à une détermination que le deuxième point d'accès sans fil est le point d'accès domestique pour le deuxième dispositif d'interphone sans fil ; et
transmettre, par le deuxième point d'accès sans fil, le deuxième flux de données audio reçu du deuxième dispositif d'interphone sans fil, et reçu du deuxième point d'accès sans fil au premier point d'accès sans fil, au système d'interphone,
où la transmission, par le premier point d'accès sans fil, du deuxième flux de données audio du deuxième dispositif d'interphone sans fil au deuxième point d'accès sans fil comprend la transmission du deuxième flux de données audio du premier point d'accès sans fil au deuxième point d'accès sans fil par une connexion Ethernet couplant de manière communicative le premier point d'accès sans fil au deuxième point d'accès sans fil,
où, en outre, le premier point d'accès sans fil transmet le deuxième flux de données audio reçu du deuxième dispositif d'interphone sans fil au système d'interphone (107, 207) par l'intermédiaire du deuxième point d'accès sans fil en transmettant les données audio du deuxième dispositif d'interphone sans fil au deuxième point d'accès sans fil par l'intermédiaire de la connexion Ethernet.

5. Procédé selon la revendication 4, comprenant en outre les étapes suivantes :
recevoir, par le deuxième point d'accès sans fil, un troisième flux de données audio provenant d'un troisième dispositif d'interphone sans fil de la pluralité de dispositifs d'interphone sans fil ;
identifier, par le deuxième point d'accès sans fil, un point d'accès domestique pour le troisième dispositif d'interphone sans fil ;
transmettre, par le deuxième point d'accès sans fil, le troisième flux de données audio du troisième dispositif d'interphone sans fil au premier point d'accès sans fil en réponse à une détermination que le premier point d'accès sans fil est le point d'accès domestique pour le troisième dispositif d'interphone sans fil ; et
transmettre, par le premier point d'accès sans fil, le troisième flux de données audio du troisième dispositif d'interphone sans fil au système d'interphone.

6. Procédé selon la revendication 4, dans lequel l'identification du point d'accès domestique du troisième dispositif d'interphone sans fil comprend la réception d'un signal provenant du troisième dispositif d'interphone sans fil identifiant le point d'accès domestique attribué au troisième dispositif d'interphone sans fil.
